# EUROPEAN PATENT SPECIFICATION

(11) **EP 0 400 087 B1**
(45) Date of publication and mention of the grant of the patent: **23.08.1995**
(21) Application number: 89904189.1
(22) Date of filing: 24.03.1989
(51) Int. Cl.: G05D 23/20, B01L 7/02

(54) **REACTION TEMPERATURE CONTROL**
INTELLIGENTER HEIZBLOCK
CONTROLE DE LA TEMPERATURE DE REACTION

(30) Priority: 26.03.1988 GB 8807297
(43) Date of publication of application: 05.12.1990
(73) Proprietor: APPLIGENE S.A., F-67402 Illkirch (FR)
(72) Inventor: Dean, Peter Duncan Goodearl, Cambridge CB3 9HP (GB); Evans, Martin John, Cambridge CB3 9HP (GB)
(74) Representative: Pernez, Helga
(86) International application number: GB8900323
(87) International publication number: WO8909437

(56) References cited:
- EP-A- 0 236 069
- DE-A- 2 556 892
- FR-A- 317 521
- US-A- 3 266 725
- US-A- 3 616 264
- US-A- 3 634 651
- US-A- 3 836 751
- US-A- 4 429 829

## Description

This invention relates to apparatus for and a method of controlling the temperature of a reaction zone. The invention is primarily concerned with controlling the temperature of biological reactions, but is not restricted to such reactions and for simplicity details of specific biological or chemical reactions are not specifically referred to in the ensuing description or the appendent claims.

Many biological and molecular biological reactions require incubation at differing temperatures for different time periods. Heating blocks and/or water baths are conventionally used as reaction zones but such are unable to change reaction temperatures rapidly, and in some circumstances are therefore unable accurately to control a reaction in accordance with a required temperature profile. Indeed it may not even prove possible accurately to maintain a truly constant reaction temperature, if this is the profile required.

US 4 429 829 shows a temperature control system for a given area, for example is an incubator, in which a heating and cooling device is operated in response to signals from temperature probes in said area. The heating and cooling device relies on the circulation of air through the area in order to achieve both heating and cooling of the area, and also cannot rapidly change (particularly increase) the temperature of reagents in the area.

It is an object of this invention to provide an improved system of reaction zone temperature control.

According to one aspect of the invention, there is provided apparatus for controlling the temperature of a plurality of reaction sites on a support the apparatus comprising reaction temperature sensing means, a microprocessor responsive to the output of the temperature sensing means, control means responsive to output signals from the microprocessor to control the operation of heating means operable to raise the temperature of the sites, and cooling means for reducing the temperature of the sites, said control being such as to cause said temperature to conform to a required temperature/time profile, characterised in that the heating means comprises a source of radiant energy, and the cooling means comprises a fan, and in that the support comprises a metal plate for evenly distributing heat derived from the source to the reaction sites, which comprise a plurality of wells in the support.

According to another aspect of the invention, there is provided a method of controlling the temperature of a plurality of reaction sites according to which said temperature is sensed by at least one temperature sensor, and a temperature/time profile is set by a programmed microprocessor, the temperature being caused to conform to the profile by heating means for raising the temperature, and by cooling means for reducing the temperature, on/off switching of the source and of the cooling means being controlled by control means which itself is controlled by the microprocessor which is in turn supplied by signals from the temperature sensor, characterised in that the heating means comprises a source of radiant energy, the cooling means comprises a fan, and in that heat from the source is evenly distributed among the sites by means of a metal plate which comprises a support having a plurality of wells each defining a respective reaction site.

The apparatus and method above described are especially useful for temperature control of biological reactions as a polymerase chain reaction for DNA amplification or an enzyme mediated DNA modification reaction but the invention may be employed for any reaction zone temperature control whether the reaction to one of the biological or molecular biological or general chemical nature.

The wells may be formed as cups in the metal plate itself, so that reaction tubes such as "Eppendorf" tubes can be fitted into the cups.

Alternatively, the wells may be embedded in a tray, for example of plastics material, which seats on the metal plate, the metal plate being provided with through apertures to accommodate the wells.

At least the bases of the wells may be transparent and if supported by a metal plate the latter is apertured to allow the wells to protrude downwardly therethrough.

In such an arrangement, the radiation can be arranged to be incident directly on the underside of the transparent wells, thereby to heat the reactants directly. An apertured shade may be provided, movable to adjust the amount of direct radiation received by the reactants. When maximum heating is required, direct radiation may be maximised. For lesser heating direct radiation may be excluded, and reliance placed on heating by conductivity through the shade. To this end the shade is preferably formed from a thermally conductive material such as copper or other thermally conductive material and be slidably located directly against the metal plate.

Where the wells are supported by an apertured metal plate the underside of the wells and the apertured plate conveniently occupy the same plane and the shade is a second apertured plate of metal in sliding contact with the underside of the apertured metal plate.

In a preferred system, the support, the source and the fan are accommodated in a housing having an air inlet and an air outlet. The source is located within the housing, and is preferably housed at the base of a reflective shield acting to direct radiation from the source toward the support for the reactants. The shield is preferably closed at the end adjacent the support by a transparent plate typically of a ceramic material. In combination with the shield, further air flow directing means in the housing ensure that the fan, when operable, causes a turbulent stream of cooling air to pass in contact with the support, in passage from the housing inlet to the housing outlet.

The source is preferably a quartz-halogen lamp emitting both visible and infra-red radiation.

The sensor may sense the temperature of the support and/or that of one or more reaction sites, the microprocessor being programmed to anticipate the time lag between the support temperature and the reaction temperature if only the support is sensed.

Further features of the apparatus and method in accordance with the invention will be apparent from the following description, which makes reference to the accompanying drawings.
Figures 1 and 2 are plan and elevational views showing the principle of the invention;
Figure 3 is a side elevational view of one arrangement, as though seen through a transparent side wall of a housing;
Figure 4 is a side elevational view of a second arrangement, similarly seen with Figure 4(a) showing a detail;
Figure 5 is a plan view of the arrangement of Figure 4, as seen from the underside of the housing lid;
Figure 6 shows another arrangement in similar view to Figure 3;
Figure 7 shows graphically a temperature profile, and
Figure 8 is a block circuit diagram.

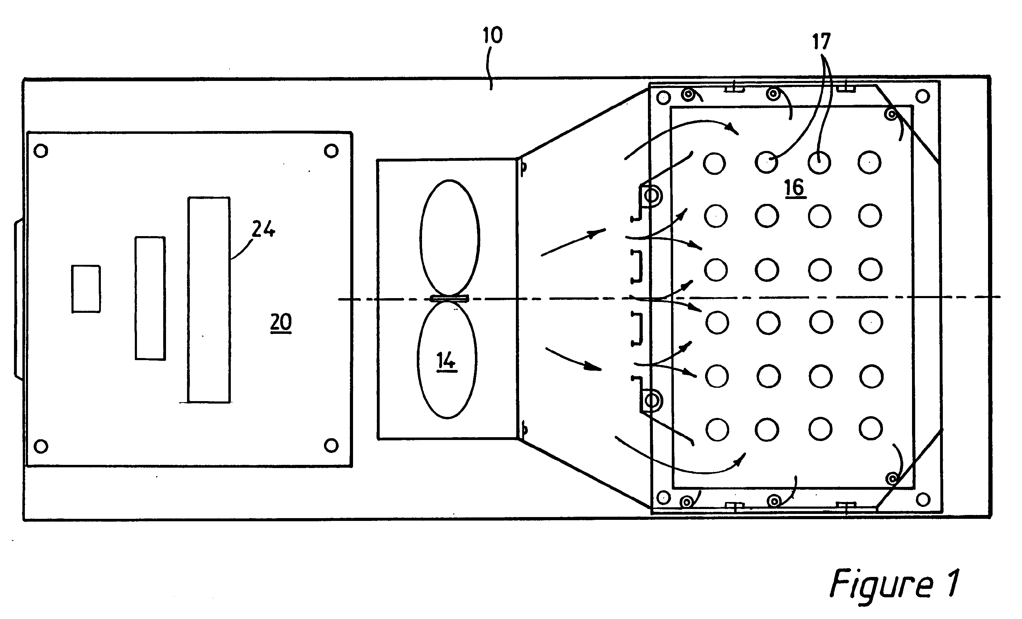

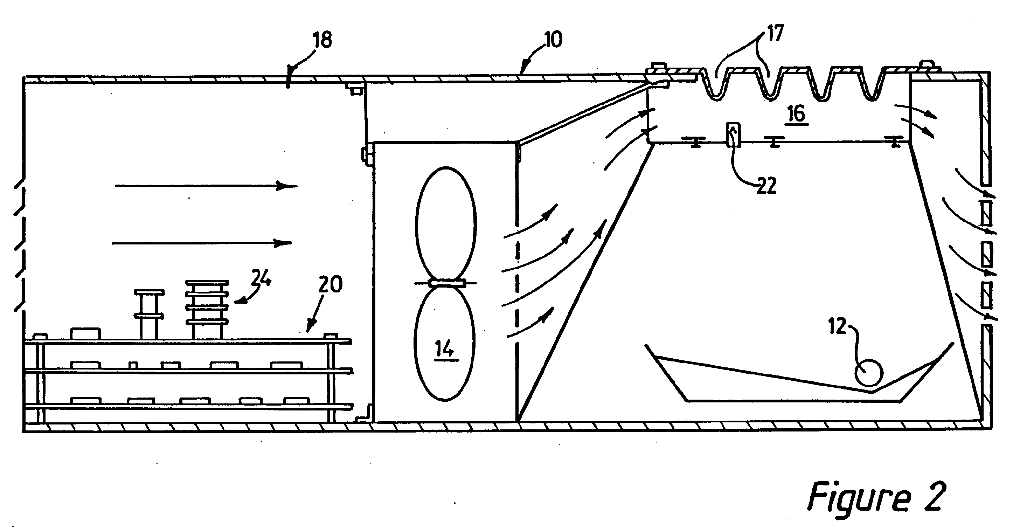

Referring to Figures 1 and 2, a main housing 10 accommodates a quartz-halogen lamp 12, a fan 14 and a metal support 16 for reactants, for example contained in reaction tubes seated in wells 17 in the support plate. To the side of the main housing 10 is a sub-housing 18 accommodating a programmable microprocessor and associated electronics on printed circuit boards 20. Associated with the support 16 is a reaction temperature sensor 22.

In use, the operation of the lamp 12 and fan 14 are controlled by suitable control means such as isolating relays 24 fed with control signals from the microprocesor, which is programmed to respond to signals received from the reaction temperature sensor 22 in order to cause the reaction temperature of the reaction tubes carried by the support 16 to follow a required temperature/time profile.

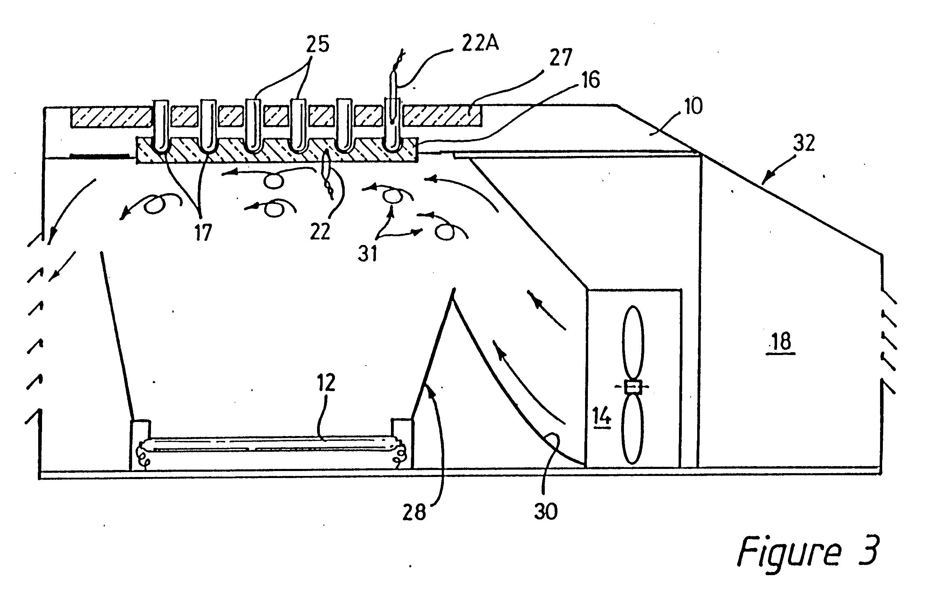

Referring now to Figure 3, there is shown one embodiment of the invention wherein, for convenience, the same reference numerals as in Figures 1 and 2 are employed for similar parts.

The support 16 comprise a plate of copper or other thermally conductive metal of low thermal capacity and good thermal conductivity. The metal plate 16 is formed with twenty four cups or wells 17 in a 6 by 4 array, shaped closely to receive the lower ends of sealed Eppendorf reaction tubes 25. Above the plate 16, the tubes 25 are laterally supported by apertures in a block 27 of thermally insulating material such as polyethylene which is let into the top wall of the housing 10.

The quartz-halogen lamp 12 is accommodated at the bottom of a shield 28 of aluminium, with polished internal walls, whereby radiation from the lamp is concentrated on to the undersurface of the metal support plate 16.

A ramp surface 30 is provided in the housing 10, whereby when the fan is operating, the air is caused to flow in turbulent manner, as indicated by the arrow 31, past the support plate 16. Sub-housing 18 again accommodates the programmable microprocessor and associated electronics including isolating relays for switching the lamp and the fan on and off. The upper surface 32 of the sub-housing 18 is conveniently formed as a desk-top carrying a keypad for selecting the microprocessor program and a display unit such as an LCD display.

A reaction temperature sensor 22 is provided in the support plate 16, and if desired a second such sensor 22A may be provided in contact with one of the reaction tubes 25. Such a sensor will hereinafter be referred to as a "phial" sensor.

In use, switching on and off of the lamp and the fan is controlled by the microprocessor, responsively to signal from either one or both of the reaction temperature sensors, to produce a required temperature/time profile for the reaction taking place in the reaction tubes.

The insulation 27 reduces loss of heat from the support plate 16 and protects the operator against burning when handling the reaction tubes.

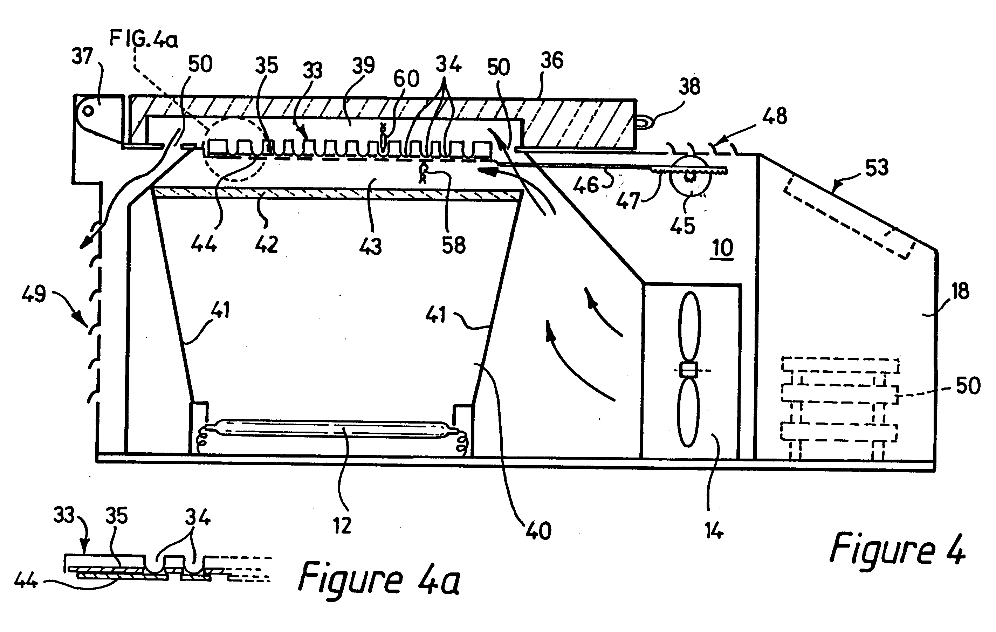

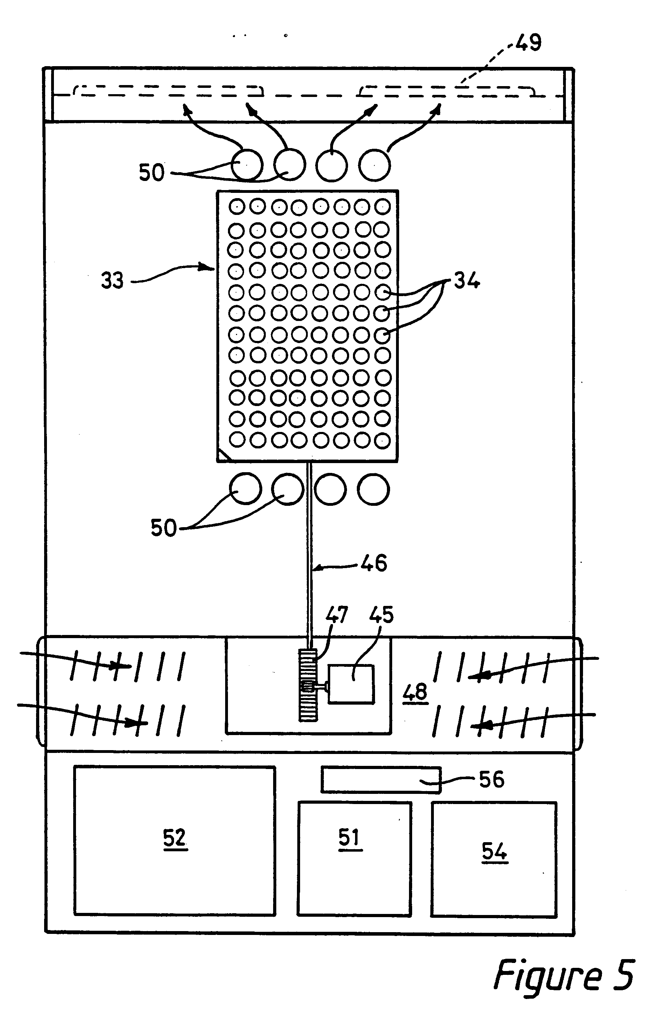

Referring now to the embodiment of Figures 4 and 5, the support here includes a thin plastics tray 33 of rectangular shape. The tray 33 is integrally formed with a column/row array of cups or wells 34 which may be designed to accommodate reaction tubes, such as "Eppendorf" reaction tubes, which may be formed from polypropylene or alternatively the tray 33 may constitute a welled reaction dish.

The plastics tray 33 seals onto a thin thermally conductive copper plate 35 drilled or otherwise formed with through-apertures to accommodate and fit closely around the lower ends of the wells 34.

The two part support 33, 35 is mounted in the housing 10 just below an openable lid 36, hinged at 37 at one end to the housing and openable about the hinge 37 by means of a handle 38 at the other end, in order to give access to the support. The lid 36 is double-walled, and contains thermal insulation material, for example of sheet polypropylene. When the lid is closed, a relatively narrow space or passage 39 exists between the underside of the lid 36 and the support plate 35.

The quartz halogen lamp 12 is again mounted near the base of the housing 10 beneath the support, in operation to emit visible and infra-red radiation towards the underside of the support in order to effect heating thereof, and thereby heat reactants carried by the reaction tray 33.

The lamp 12 is mounted at the base of an upstanding aluminium shield 40 with polished interior surfaces 41 whereby loss of radiation from the lamp is minimised. The shield 40 is optionally closed at the top, just beneath the underside of the support 33,35 by a transparent ceramic plate 42. The lamp 12, shield 40 and ceramic plate 42 in combination define the shape of a truncated pyramid, base uppermost. A space or passage 43 exists between the ceramic plate 42 and the underside of the support 33, 35.

As illustrated, in particular in Figure 4(a), an apertured plate of copper 44 is mounted immediately beneath the support plate 35 to be slidably movable relative thereto, and with a layer of conductive grease therebetween. By relative sliding movement of the plate 44 and the plate 35 so as to align the apertures in the two plates, to a greater or lesser extent, so the reactant wells 34 will be exposed to or shaded from direct radiation from the lamp 12. To this end the apertured copper plate 44 is apertured in a row/column array corresponding to that of the reaction sites on the support.

In a preferred construction the support plate 35 comprises a 1mm thick copper sheet drilled or otherwise formed with ninety six apertures in which a corresponding number of reaction wells, (eg wells formed in a transparent polystyrene tray), are received. The bottoms of the wells are coplanar with the underside of the plate 35. The second copper sheet 44, which may be of similar thickness material, is drilled or otherwise apertured in like manner and is slidable directly beneath and in contact with the plate 35 so that the lower plate is in contact with the upper plate 35 for exposing more or less of the underside of each of the wells to the lamp radiation. In effect, this arrangement enables the liquid reactants to be directly exposed to the radiation, (through the transparent bases of the wells) whereby rapid heating to a relatively high temperature is possible. However, if only lower reaction temperatures are required the undersides of the wells may be shaded, by appropriate sliding of the second sheet so that heating of the reactants occurs partly or wholly by conduction. The second sheet may be manually adjustable or, as illustrated, adjustable by a motor 45 which drives a connecting rod 46 via a ratchet device 47. The motor 45 may also be employed to drive the fan 14, provided a suitable clutch or other disengagement means is provided.

Where a very rapid rise in temperature is required the shading plate 44 is moved to fully expose the wells to the lamp radiation and as soon as the desired temperature is attained, is moved out of alignment to hold the temperature achieved.

Mounted in the housing 10 to the side of the lamp/shield assembly is the fan 14. In operation, the fan 14 draws in environmental air at room temperature through an air inlet, 48 in the top wall of the housing above the fan, and expels air through a louvred outlet 49 on the side of the lamp/shield assembly remote from said fan. Figure 5 shows the air holes 50 in the support plate mounting which enable the air to pass into and exit from the ends of the passage 39. The air is thus caused to pass in turbulent flow through the passages 39, 43 above and below the support 33, 35, thereby to effect cooling of the latter and the reactants carried thereby. Air flow within the housing is again generally indicated by the marked arrows.

Although not shown, the air inlet may alternatively be located on the remote side of the sub-housing.

The sub-housing 18 contains a microprocessor 51 and associated electronics on a stack 52 of printed circuit boards, and the upper surface 53 of the sub-housing again houses a keypad 54 and an LCD display 56 associated with the microprocessor.

The microprocessor 51 is able to receive signals output from either one or both of two reaction temperature sensors.

The sensor 58 senses the reaction zone temperature indirectly by sensing the temperature of the plate 35.

The sensor 60 senses the reaction temperature directly, for example by dipping into the reactants in a selected sample reaction tube on the support plate.

The sensors 58, 60 may comprise thermocouples or thermistors of a commercially available kind having appropriate range and sensitivity for the purpose for which they are required.

The microprocessor 51 responds to the signals from one or the other (or both) of the two temperature sensors to provide switching signals for switching the lamp 12 and the fan 14 on and off, each independently of the other, in order to cause the temperature of the reactants on the support plate to follow a required temperature/time profile. This may for example be programmed into the memory of the microprocessor, for example by means of the keypad.

To enable it to follow the profile with respect to time, the microprocessor includes an electronic clock (not shown).

The required temperature profile may range from a constant temperature to a temperature varying between a plurality of upper and lower values with varying time intervals.

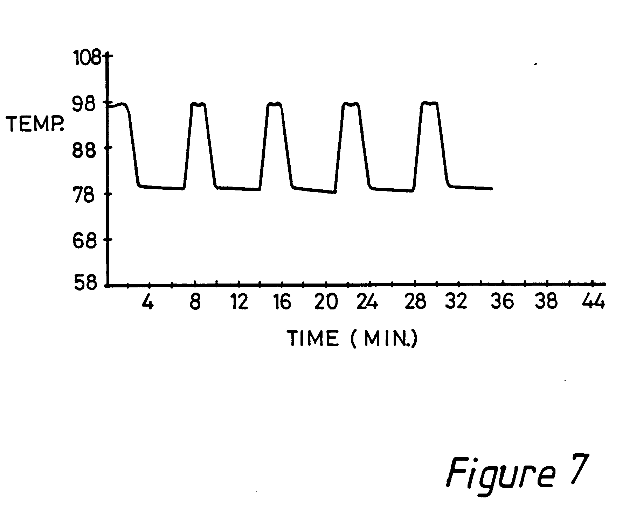

A temperature profile commonly required for biological reactions involves a temperature cyclically varying between two temperatures with a regular periodicity, as exemplified by Figure 7.

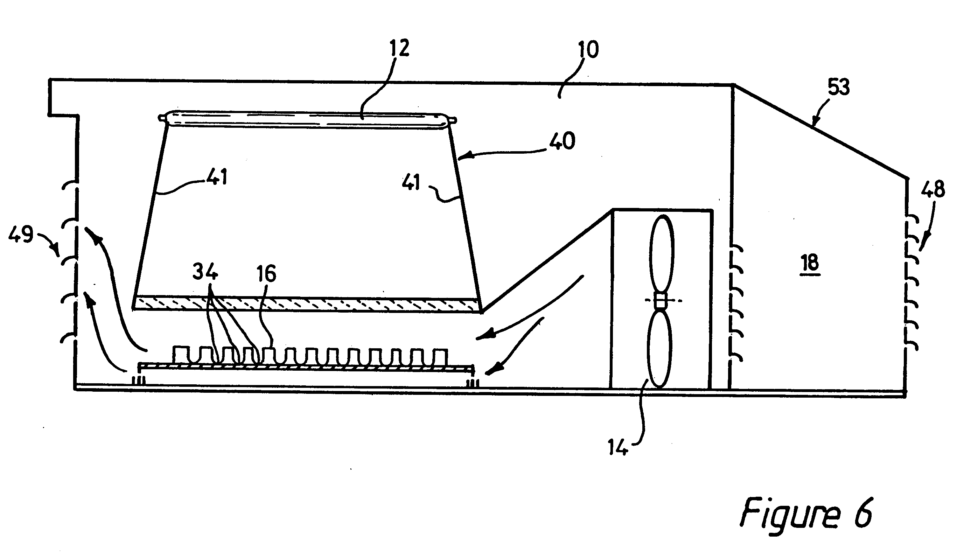

Figure 6 shows a modified arrangement in which the lamp/shield assembly 12, 40 is inverted and positioned above the support 16, which is accessible through a hatch in the side wall of the housing 10. The support 16 may be a welled upper plate as described with reference to Figure 3 or a composite support as described with reference to Figures 4 and 5, and is located on apertured guides which enable turbulant air flow beneath, as well as above the support. The housing surface beneath the support plate 16 is reflectively coated. In this connection, it is mentioned that the underside of the lid in the embodiment of Figures 4 and 5 may also be reflectively coated.

Apart from the foregoing, the arrangement of Figure 6 is generally similar to that of Figures 4 and 5 and corresponding reference numerals are therefore employed.

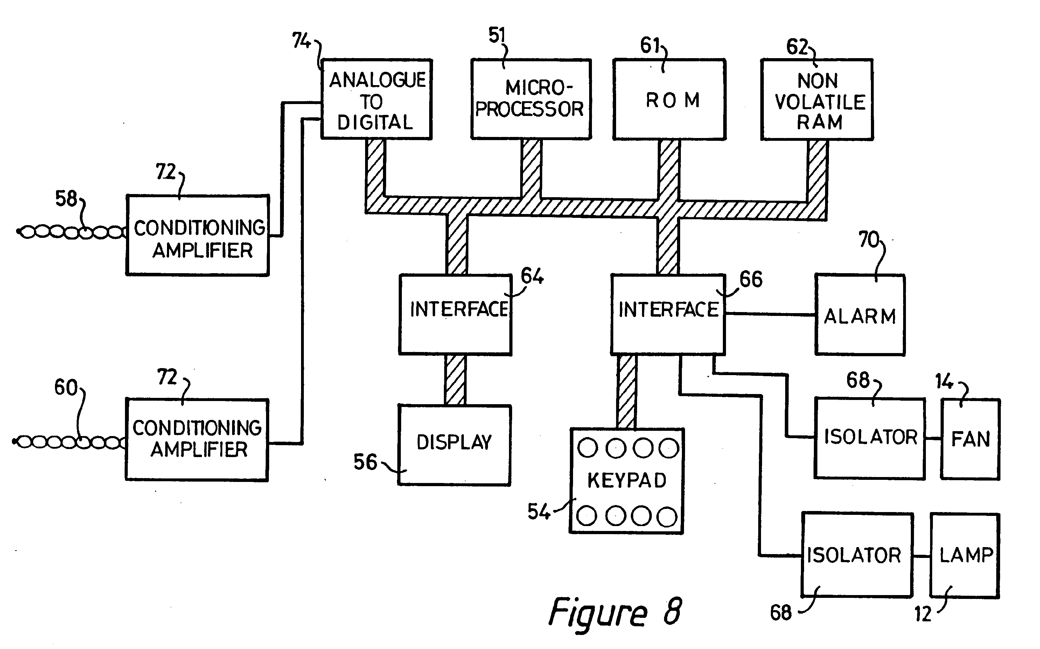

Figure 8 is a block circuit diagram showing the control electronics, in which the same references as in Figures 1 to 3 are employed for correspoding components. Additionally, references 61 and 62 designate the ROM and the non-volatile RAM of the microprocessor 51, respectively, and references 64 and 66 denote an interface between the microprocessor 51 and the display 56 (which with isolators 68 in the form of solid state relays, may be a computer monitor screen), and between the microprocessor 51 and the keypad 54. The interface 66 also connects the microprocessor 51 with isolators 68 in the form of solid state relays, for effecting switching of the lamp 12 and the fan 14, and also with an alarm 70 such as a buzzer operative in the event of a fault. The inputs to the microprocessor 51 from the reaction-temperature sensors 58, 60 are supplied via conditioning amplifiers 72 and an analogue to digital converter 74.

Reed relays may be employed as the isolators 68.

In connection with the foregoing arrangements above described, the following further points of detail are to be noted:
1. In addition to being a good conductor having low thermal capacity, it is important that the support plate 16 should be well thermally insulated from its surroundings, to conserve the low thermal capacity and prevent heat leaks from surrounding parts of apparatus. A copper plate of about 1mm thickness will often be convenient.
2. The design of the polished reflective shield 34 to focus radiation from a tungsten halogen source onto the matt black base of copper plate is important, and the insulation of the top surface of the instrument also serves to prevent exposed hot surfaces.
3. The use of a "phial" thermocouple, ie direct-acting sensor 60, enables the temperature of a representative sample to be measured, giving more precise information than merely measuring the temperature of the plate.
   If the temperature of the plate is controlled in a series of step changes, it will be seen that the temperature of the phial lags behind the plate temperature, reaching equilibrium much later. By using temperature information from the phial thermocouple 60, the controller can operate to produce an improved time response for the temperature profile of the sample, thus reducing cycle times.
   The phial thermocouple 60 may also be used as a remote sensor. In this manner any existing manual technique which has been operated successfully, may be duplicated by first taking the "remote sensor" through the manual cycle, noting temperatures achieved, and then programming the IHB to automatically repeat this cycle.
4. The instrument is stand-alone, requiring only a single mains supply, and no fluids are involved.
5. A powerful, versatile programming protocol for the microprocesor 48 is desirable for giving either immediate constant temperature operation or a programmed cycle of temperature levels stored in non-volatile memory.
6. A suitable quartz-halogen lamp 12 is a conventionally available lamp of 300 to 500 Watts as commercially available, for example for floodlighting, whilst a suitable fan 14 is a Boxer (Trade Mark) electronic cooling fan, also commercially available.
7. Turbulent air flow is important for uniform cooling of the support plate 16, and this is substantially assisted by provision of the ramp for guiding the air flow into the passages 32, 40 above and below the support plate, as shown in the drawings.
8. The wells in the support plate 16 are desirably sufficiently spaced from the peripheral edge of the plate at least to minimise any edge effects.
9. An interlock is provided at the lid. As hitherto mentioned, a multiwell reaction dish may be fitted into the welled support plate. A pin on the lid prevents closing unless the multiwell dish is correctly positioned with its key at the correct corner. A microswitch, which operates upon contact with the multiwell dish, may also prevent operation unless a multiwell dish is in position. In the case of missuse or mid-cycle failure, operation will only recommence from the beginning after a reset.
10. One successful method for programming the temperature control is to use a polynomial equation to derive a relationship describing the "mark to space ratio" for the lamp flashing from the absolute required temperature and from the differential of the required temperature from the actual temperature. When large upward temperature jumps are required it is advisable to limit the differential term of the equation so as to avoid overshoot. This type of relatively simple control algorithm works well for predicting the plate temperature but in predicting the sample temperature, where there can be an appreciable lag in response (depending upon the sample volume or poor thermal conductivity in the case of a multiwell plate for instance), a time delay term becomes more important. There is a compromise to be struck between fast response time and the possibilities for oscillation. One simple way to provide a good sample control is to use a similar polynomial equation for the sample temperature and relate this not to the lamp flashing directly but to a setting for the plate temperature.
11. It is necessary to ensure optimal heat transfer between the support and the reaction tubes (or reaction dish). For ensuring this, the wells in the copper plate may be accurately shaped and dimensioned by electroforming, using a drilled copper sheet as a substrate and the reaction tubes themselves or the dish as a male mould. Alternatively, the wells may be formed by machining a solid block or by spinning.
   In the event, it should be understood that, in comparison with reactant supports as have been employed in the prior art, the support plate employed in the present invention is of much lower bulk and much smaller thermal capacity and therefore possess a much smaller thermal inertia.
12. A modification from either of the two reactant supports hitherto described in a plain flat, thin copper support plate on which is freely placed a reaction dish of metal or plastics containing flat-bottomed cups or wells for reactants.
13. A prime purpose of the apparatus is to provide specified timed incubations for a designated enzyme reaction series as hitherto mentioned, with automatic control and auto-prompting of the operator.

## Claims

1. Apparatus for controlling the temperature of a plurality of reaction sites (17,34) on a support (16,33,35), the apparatus comprising reaction temperature sensing means (22,58,60), a microprocessor (51) responsive to the output of the temperature sensing means (22,58,60), control means (24) responsive to output signals from the microprocessor (51) to control the operation of heating means (12) operable to raise the temperature of the sites (17,34), and cooling means (14) for reducing the temperature of the sites (17,34), said control being such as to cause said temperature to conform to a required temperature/time profile, characterised in that the heating means comprises a source (12) of radiant energy, and the cooling means comprises a fan (14), and in that the support comprises a metal plate (16,35) for evenly distributing heat derived from the source (12) to the reaction sites, which comprise a plurality of wells in the support (17,34,35).

2. Apparatus according to claim 1, characterised in that the wells (17) are provided in the upper surface of the metal plate (16).

3. Apparatus according to claim 1, characterised in that the support includes a tray (33) of transparent plastics material preformed with wells (34), and the tray (33) seats on the metal plate (35), with the wells accommodated in through-apertures in the plate (35).

4. Apparatus according to any of claims 1 to 3, characterised in that the source (12) is a quartz-halogen lamp housed at the base of a reflective shield (40) acting to direct light from the lamp (12) towards the support (33) for the reactants, and the shield (40) is closed at the end adjacent the support (33) by a transparent ceramic plate (42).

5. Apparatus according to any preceding claim, characterised in that the source (12) is positioned beneath the support (16,33), whereby no direct radiation falls on the reactants.

6. Apparatus according to any of claims 1 to 4, characterised in that the source (12) is positioned above the support (16), whereby radiation from the source falls directly on the reactants.

7. Apparatus according to any preceding claim, characterised in that the support (16,33), the lamp (12) and the fan (14) are accommodated in a housing (10,18) having an air inlet (48) and an air outlet (49), and the housing (10,18) contains air flow directing means (30,50) for causing a turbulent stream of air past the support (16,33) when the fan is operating.

8. Apparatus according to claim 7, characterised in that the housing (10) has a lid (34) of thermally insulating material movable to provide access to the support (33).

9. Apparatus according to any of claims 1 to 8, charaterised by an openable and closable apertured shade (44) positioned between the source (12) and the support (33).

10. Apparatus according to any of claims 1 to 9, characterised in that the reaction temperature sensor means comprises a first sensor (58) which senses the temperature of the support (33,35), and a second sensor (60) for sensing the temperature of the reactants at at least one of the reaction sites (34).

11. A method of controlling the temperature of a plurality of reaction sites (17,34) according to which said temperature is sensed by at least one temperature sensor (22,58,60), and a temperature/time profile is set by a programmed microprocessor (51), the temperature being caused to conform to the profile by heating means (12) for raising the temperature, and by cooling means (14) for reducing the temperature, on/off switching of the heating means (12) and of the cooling means (14) being controlled by control means (24) which itself is controlled by the microprocessor (51) which is in turn supplied by signals from the temperature sensor (22,58,60), characterised in that the heating means comprises a source (12) of radiant energy, and the cooling means comprises a fan (14), and in that heat from the source (12) is evenly distributed among the sites (17,34) by means of a metal plate (16,35) which comprises a support having a plurality of wells (17,34), each reaction site comprising a respective well.

12. A method according to claim 11, characterised in that it is applied to heat and cool the reaction in accordance with a required cyclic sequence of temperature variations.

13. A method according to claim 11 or claim 12, characterised in that it is applied to control a polymerase chain reaction for DNA amplification, or an enzyme mediated DNA modification reaction.

## Patentansprüche

1. Gerät zum Regeln der Temperatur einer Vielzahl von Reaktionsorten (17, 34) auf einem Ständer (16, 33, 35) mit einem Reaktionstemperaturmeßmittel (22, 58, 60), einem auf die Ausgabe der Temperaturmeßmittel (22, 58, 60) ansprechenden Mikroprozessor (51), einem auf die Ausgangssignale vom Mikroprozessor (51) ansprechenden Regelmittel (24) zum Steuern des Betriebes eines Heizmittels (12) zum Anheben der Temperatur der Orte (17, 34) und mit einem Kühlmittel (14) zum Herabsetzen der Temperatur der Orte (17, 34), wobei diese Steuerung so beschaffen ist, daß die Temperatur mit einem Temperatur/Zeitsollprofil in Übereinstimmung gebracht wird, dadurch gekenn- zeichnet, daß das Heizmittel eine Strahlungsenergie-Quelle (12) und das Kühlmittel einen Lüfter (14) umfaßt und daß der Ständer eine Metallplatte (16, 35) zur gleichförmigen Verteilung der von der Quelle (12) abgeleiteten Wärme auf die Reaktionsorte umfaßt, die eine Vielzahl von Vertiefungen in dem Ständer (17, 34, 35) umfassen.

2. Gerät nach Anspruch 1, dadurch gekennzeichnet, daß die Vertiefungen (17) in der Oberseite der Metallplatte (16) vorgesehen sind.

3. Gerät nach Anspruch 1, dadurch gekennzeichnet, daß der Ständer eine mit Vertiefungen (34) vorgeformte Schale (33) aus einem lichtdurchlässigen Kunststoff enthält und die Schale (33) auf der Metallplatte (35) aufsitzt, wobei die Vertiefungen in durchgehenden Öffnungen in der Platte (35) aufgenommen sind.

4. Gerät nach irgendeinem der Ansprüche 1 bis 3, dadurch gekennzeichnet, daß die Quelle (12) eine an der Basis eines reflektierenden Schirmes (40) untergebrachte Quarz-Halogenlampe ist zum Richten des Lichtes von der Lampe (12) auf den Ständer (33) für die Reaktanten und daß der Schirm (40) an dem an dem Träger (33) angrenzenden Ende durch eine lichtdurchlässige keramische Platte (42) verschlossen ist.

5. Gerät nach irgendeinem vorhergehenden Anspruch, dadurch gekennzeichnet, daß die Quelle (12) unter dem Träger (16, 33) angeordnet ist, so daß keine unmittelbare Strahlung auf die Reaktanten auftrifft.

6. Gerät nach irgendeinem der Ansprüche 1 bis 4, dadurch gekennzeichnet, daß die Quelle (12) über dem Träger (16) angeordnet ist, so daß die Strahlung von der Quelle unmittelbar auf die Reaktanten trifft.

7. Gerät nach irgendeinem vorhergehenden Anspruch, dadurch gekennzeichnet, daß der Ständer (16, 33), die Lampe (12) und der Lüfter (14) in einem Gehäuse (10, 18) mit einem Lufteinlaß (48) und einem Luftauslaß (49) aufgenommen sind und das Gehäuse (10, 18) Mittel (30, 50) zum Richten der Luftströmung bei laufendem Lüfter zum Bewirken einer turbulenten Luftströmung am Ständer (16, 33) vorbei enthält.

8. Gerät nach Anspruch 7, dadurch gekennzeichnet, daß das Gehäuse (10) einen zum Ermöglichen eines Zugangs zum Ständer (33) verschiebbaren Deckel (34) aus einem thermisch isolierenden Material aufweist.

9. Gerät nach irgendeinem der Ansprüche 1 bis 8, gekennzeichnet durch einen zwischen der Quelle (12) und dem Ständer (33) angeordneten, zu öffnende und zu schließende Öffnungen aufweisenden Schirm (44).

10. Gerät nach irgendeinem der Ansprüche 1 bis 9, dadurch gekennzeichnet, daß das Reaktionstemperatursensormittel einen ersten Sensor (58), der die Temperatur der Ständers (33, 35) mißt, und einen zweiten Sensor (60) zum Messen der Temperatur der Reaktanten an mindestens einem der Reaktionsorte (34) umfaßt.

11. Ein Verfahren zum Regeln der Temperatur einer Vielzahl von Reaktionsorten (17, 34), gemäß dem die Temperatur mit mindestens einem Temperatursensor (22, 28, 60) gemessen und ein Temperatur/Zeitprofil mit einem programmierten Mikroprozessor (51) vorgegeben wird, wobei die Temperatur durch ein Heizmittel (12) zu ihrem Anheben und durch ein Kühlmittel (14) zu ihrem Absenken mit dem Profil in Übereinstimmung gebracht wird, Ein- und Ausschalten des Heizmittels (12) und des Kühlmittels (14) durch ein Regelmittel (24) gesteuert wird, das seinerseits vom Mikroprozessor (51) gesteuert wird, der seinerseits mit Signalen vom Temperatursensor (22, 28, 60) beaufschlagt wird, dadurch gekennzeichnet, daß das Heizmittel eine Strahlungsenergiequelle (12) und das Kühlmittel ein Gebläse (14) ist und daß Wärme von der Quelle (12) mit einer Metallplatte (16, 35), die einen Ständer mit einer Vielzahl von Vertiefungen (17, 34) bildet, gleichmäßig über die Orte (17, 34) verteilt wird, wobei jeder Reaktionsort eine entsprechende Vertiefung umfaßt.

12. Ein Verfahren nach Anspruch 11, dadurch gekennzeichnet, daß es zum Erwärmen und Kühlen der Reaktion nach Maßgabe einer notwendigen zyklischen Folge von Temperaturänderungen angewendet wird.

13. Ein Verfahren nach Anspruch 11 oder Anspruch 12, dadurch gekennzeichnet, daß es zum Steuern einer Polymerase-Kettenreaktion zur DNA-Amplifikation oder einer enzymvermittelten DNA-Modifikationsreaktion angewendet wird.

## Revendications

1. Appareil pour commander la température d'un ensemble de sites de réaction (17, 34) sur un support (16, 33, 35), l'appareil comprenant des moyens de détection de la température de réaction (22, 58, 60), un microprocesseur (51) qui réagit à l'information de sortie des moyens de détection de température (22, 58, 60), des moyens de commande (24) qui réagissent à des signaux de sortie provenant du microprocesseur (51) de façon à commander le fonctionnement de moyens de chauffage (12) que l'on peut faire fonctionner pour élever la température des sites (17, 34), et de moyens de refroidissement (14) pour réduire la température des sites (17, 34), la commande faisant en sorte que la température se conforme à un profil température/temps exigé, caractérisé en ce que les moyens de chauffage comprennent une source (12) d'énergie rayonnante, et les moyens de refroidissement comprennent un ventilateur (14), et en ce que le support comprend une plaque de métal (16, 35), destinée à répartir uniformément la chaleur provenant de la source (12) vers les sites de réaction, qui comprennent un ensemble de puits dans le support (17, 34, 35).

2. Appareil selon la revendication 1, caractérisé en ce que les puits (17) sont formés dans la surface supérieure de la plaque de métal (16).

3. Appareil selon la revendication 1, caractérisé en ce que le support comprend un plateau (33) en matière plastique transparente dans lequel des puits (34) sont formés à l'avance, et le plateau (33) repose sur la plaque de métal (35), avec les puits logés dans des ouvertures traversantes dans la plaque (35).

4. Appareil selon l'une quelconque des revendications 1 à 3, caractérisé en ce que la source (12) est une lampe du type quartz-halogène, logée à la base d'un écran réfléchissant (40) ayant pour action de diriger la lumière provenant de la lampe (12) vers le support (33) pour les réactifs, et l'écran (40) est fermé, à l'extrémité adjacente au support (33) par une plaque de céramique transparente (42).

5. Appareil selon l'une quelconque des revendications précédentes, caractérisé en ce que la source (12) est placée au-dessous du support (16, 33), grâce à quoi aucun rayonnement direct ne tombe sur les réactifs.

6. Appareil selon l'une quelconque des revendications 1 à 4, caractérisé en ce que la source (12) est placée au-dessus du support (16), grâce à quoi le rayonnement provenant de la source tombe directement sur les réactifs.

7. Appareil selon l'une quelconque des revendications précédentes, caractérisé en ce que le support (16, 33), la lampe (12) et le ventilateur (14) sont logés dans une enceinte (10, 18) ayant une entrée d'air (48) et une sortie d'air (49), et l'enceinte (10, 18) contient des moyens (30, 50) destinés à diriger l'écoulement de l'air, pour faire passer un écoulement d'air turbulent devant le support (16, 33) lorsque le ventilateur est en fonctionnement.

8. Appareil selon la revendication 7, caractérisé en ce que l'enceinte (10) comporte un couvercle (34) en un matériau isolant au point de vue thermique, que l'on peut déplacer pour accéder au support (33).

9. Appareil selon l'une quelconque des revendications 1 à 8, caractérisé par un écran d'atténuation de la lumière (44), comportant des ouvertures et pouvant être ouvert et fermé, placé entre la source (12) et le support (33).

10. Appareil selon l'une quelconque des revendications 1 à 9, caractérisé en ce que les moyens détecteurs de température de réaction comprennent un premier capteur (58) qui détecte la température du support (33, 35), et un second capteur (60) pour détecter la température des réactifs à l'un au moins des sites de réaction (34).

11. Procédé de commande de la température d'un ensemble de sites de réaction (17, 34), selon lequel cette température est détectée par au moins un capteur de température (22, 58, 60), et un profil de température/temps est fixé par un microprocesseur programmé (51), la température étant commandée de façon à se conformer au profil, à l'aide de moyens de chauffage (12) destinés à augmenter la température, et de moyens de refroidissement (14) destinés à réduire la température, la mise en fonction/ hors fonction des moyens de chauffage (12) et des moyens de refroidissement (14) étant commandée par des moyens de commande (24) qui sont eux-mêmes commandés par le microprocesseur (51) qui reçoit à son tour des signaux provenant du capteur de température (22, 58, 60), caractérisé en ce que les moyens de chauffage comprennent une source (12) d'énergie rayonnante, et les moyens de refroidissement comprennent un ventilateur (14) et en ce que la chaleur qui provient de la source (12) est uniformément répartie parmi les sites (17, 34) au moyen d'une plaque de métal (16, 35) qui comprend un support ayant un ensemble de puits (17, 34), chaque site de réaction comprenant un puits respectif.

12. Procédé selon la revendication 11, caractérisé en ce qu'il est appliqué au chauffage et au refroidissement de la réaction conformément à une séquence cyclique de variations de température exigée.

13. Procédé selon la revendication 11 ou la revendication 12, caractérisé en ce qu'il est appliqué à la commande d'une réaction en chaîne de polymérases pour l'allongement d'ADN, ou à une réaction de modification d'ADN ayant une enzyme pour médiateur.
